# DEMANDE DE BREVET EUROPEEN

(11) **EP 1 967 261 A1**
(43) Date de publication de la demande: **10.09.2008**
(21) Numéro de dépôt: 07103440.9
(22) Date de dépôt: 02.03.2007
(51) Int. Cl.: B01J 8/18, B01J 8/36, B01J 8/14

(54) **Dispositif et procédé d'injection de fluide dans un lit fluidifié rotatif.**

(71) Demandeur: TOTAL PETROCHEMICALS RESEARCH FELUY, 7181 Seneffe (Feluy) (BE)
(72) Inventeur: de Broqueville, Axel, B - 1390, Grez-Doiceau (BE)
(74) Mandataire: Leyder, Francis

(57) **Abrégé**

La présente invention se rapporte à un dispositif à lit fluidifié rotatif comprenant : un réacteur comprenant au moins une chambre circulaire, un dispositif d'alimentation et un dispositif d'évacuation de particules solides dans et de ladite chambre circulaire, un dispositif d'alimentation d'un ou plusieurs fluides, disposé autour de la paroi circulaire de ladite chambre circulaire, ledit dispositif comprenant des injecteurs de fluide répartis autour de ladite paroi circulaire permettant d'injecter le ou lesdits fluides le long de ladite paroi circulaire, et un dispositif d'évacuation du ou des fluides, caractérisé en ce que lesdits injecteurs de fluides comprennent des passages comprenant un ou plusieurs étranglements s'élargissant brutalement, de manière non aérodynamique, avec génération de turbulence avant la rencontre du ou desdits fluides avec les particules solides du dit lit fluidifié rotatif.

## Description

### Domaine technique de l'invention

La présente invention se rapporte à un dispositif à lit fluidifié rotatif comprenant un dispositif d'injection de fluide régulièrement répartis le long de la paroi circulaire du dispositif à lit fluidifié. La présente invention se rapporte aussi à un procédé d'injection de fluide au travers d'un lit fluidifié rotatif supporté par une paroi circulaire, fixe ou rotative, avec des injecteurs de fluide régulièrement répartis le long de ladite paroi circulaire.

### Arrière plan technologique de l'invention

Lorsqu'un fluide est injecté tangentiellement à la paroi cylindrique d'un réacteur contenant des particules solides au travers d'injecteurs répartis uniformément le long de cette paroi et que le fluide est évacué centralement par des ouvertures réparties uniformément le long d'une cheminée centrale traversant le réacteur cylindrique le long de son axe de symétrie, les particules solides vont former un lit fluidifié rotatif, plus ou moins homogène, traversé par ledit fluide tournant le long de la paroi cylindrique du réacteur avant d'être évacué par la cheminée centrale, la force centrifuge empêchant lesdites particules solides d'être entraînées par le fluide dans ladite cheminée.

Toutefois, dans certaines circonstances, on peut observer la propension des particules solides à se concentrer dans des zones annulaires, principalement le long des parois transversales, ou dans des zones longitudinales tournant rapidement, le fluide passant principalement entre ces zones.

Par exemple, lorsque le fluide est injecté par de longues fentes longitudinales réparties uniformément le long de la paroi cylindrique du réacteur à partir d'une chambre d'alimentation à pression uniforme, les particules solides ont généralement tendance, durant la phase de remplissage du réacteur, c'est-à-dire avant la formation d'un lit fluidifié d'une épaisseur suffisante, à se concentrer préférentiellement le long d'une ou des deux parois transversales du réacteur ou le long de zones longitudinales tournant rapidement, le fluide passant préférentiellement entre ces zones.

Cette distribution inhomogène des particules solides peut persister dans certaines circonstances, car elle génère une distribution inhomogène des flux de fluide le long des fentes longitudinales, ce qui amplifie ou maintient la distribution inhomogène des particules solides. En effet, le fluide sort préférentiellement par les ouvertures ou portions d'ouvertures où la pression des solides est la plus faible et chasse les particules solides de ces zones vers les zones où les particules solides s'accumulent et donc inhibent le passage du fluide. Le fluide se fraye donc un ou des passages préférentiels ou chenaux au travers des particules solides et empêche la formation d'un lit fluidifié homogène.

Lorsque les particules solides se concentrent en tranches annulaires tournant le long de la paroi du réacteur, elles sont chassées et supportées par des tourbillons annulaires de fluide. Ce phénomène de concentration annulaire des particules solides entraînant la "chenalisation annulaire" de l'écoulement du fluide est connu sous le nom de "Effet Tornade" obtenu en injectant le fluide dans des injecteurs répartis le long de tranches annulaires ou hélicoïdalement le long de la paroi cylindrique d'un réacteur. Ce procédé est décrit dans le brevet US 3,768,172 du 30 octobre 1973.

Lorsque les particules solides se concentrent le long de zones longitudinales pour former un ou plusieurs "bancs longitudinaux" de particules solides tournant rapidement le long de la paroi cylindrique du réacteur, mais moins vite que la vitesse moyenne de rotation des particules solides, le fluide sortant préférentiellement par les ouvertures situées dans les zones où il y a le moins de solides, c'est-à-dire entre les "bancs longitudinaux". La vitesse du fluide étant plus élevée le long des zones où il y a peu de solides, les particules solides arrachées par le fluide sur le devant d'un dit banc longitudinal sont accélérées et rattrapent l'arrière du banc suivant ou du même banc. Ainsi les bancs sont en permanence érodés par l'avant et reconstruits par l'arrière, ce qui explique qu'ils tournent plus lentement que les solides et le fluide se fraye un chenal tournant à la même vitesse que lesdits bancs longitudinaux. On peut parler de "chenalisation longitudinale rotative" de l'écoulement du fluide.

Ces inhomogénéités augmentent les pertes de particules solides par la cheminée centrale, diminuent la qualité du contact entre le fluide et les solides et donc les transferts de masse et d'énergie et élargissent la distribution du temps de séjour du fluide à l'intérieur du lit fluidifié.

Ces inhomogénéités apparaissent principalement lorsque le rapport entre la densité des solides et du fluide ou entre la longueur du réacteur et l'épaisseur du lit fluidifié est très grand. Elles sont dues ou entretenues par les variations locales de la pression centrifuge des particules solides sur la paroi cylindrique du réacteur. Celles-ci entraînent des variations de flux de fluide d'autant plus grandes que la chute de pression du fluide au travers des injecteurs est faible par rapport à ces variations de pression.

Elles peuvent être évitées ou réduites à l'aide de déflecteurs forçant la circulation des solides devant les injecteurs de fluide comme des hélices hélicoïdales utilisées dans la demande WO 2005/099887 déposée au nom du même inventeur ou en utilisant une cheminée rotative, comme cela est décrit dans la demande de brevet EP 06008351.6 déposée par Total Petrochemical Research Feluy le 21-04-2006 au nom du même inventeur, ou en augmentant la chute de pression au travers des injecteurs de fluide, par exemple en utilisant des parois poreuses. Dans ce dernier cas, la chute de pression étant proportionnelle au débit du fluide, il faut une chute de pression significative au travers de la paroi poreuse pour pouvoir homogénéiser les flux de fluide et donc une consommation d'énergie importante, lorsque la pression centrifuge des solides sur la paroi circulaire est élevée.

### Sommaire de l'invention

Dans un premier aspect, la présente invention se rapporte à un dispositif à lit fluidifié rotatif comprenant un dispositif d'injection de fluide permettant de réduire de manière significative les problèmes de "chenalisation" décrits ci-dessus.

En particulier, l'invention se rapporte à un dispositif à lit fluidifié rotatif comprenant :
- un réacteur comprenant au moins une chambre circulaire,
- un dispositif d'alimentation et un dispositif d'évacuation de particules solides (10) dans et de ladite chambre circulaire,
- un dispositif d'alimentation d'un ou plusieurs fluides (2), gazeux ou liquides, disposé autour de la paroi circulaire (1) de ladite chambre circulaire, ledit dispositif comprenant des injecteurs de fluide répartis autour de ladite paroi circulaire (1) dont l'orientation a une composante tangentielle à ladite paroi circulaire, permettant d'injecter le ou lesdits fluides (2) dans ladite chambre circulaire le long de ladite paroi circulaire (1) dans une direction ayant une composante tangentielle à ladite paroi circulaire, permettant ainsi de faire tourner lesdites particules solides le long de ladite paroi circulaire, et
- un dispositif d'évacuation du ou des fluides,
caractérisé en ce que lesdits injecteurs de fluides comprennent des passages comprenant un ou plusieurs étranglements qui s'élargissent de manière non aérodynamique, permettant ainsi de contrôler la distribution des flux du ou desdits fluides le long de ladite paroi circulaire et d'améliorer la fluidisation et l'homogénéité dudit lit fluidifié rotatif.

Selon un mode de réalisation particulier, ledit dispositif d'évacuation du ou des fluides comprend une cheminée centrale traversant longitudinalement ou pénétrant à l'intérieur de ladite chambre circulaire, la paroi de ladite cheminée centrale comprenant au moins une ouverture de sortie permettant d'évacuer centralement, par ladite cheminée centrale, le fluide ou mélange de fluides de ladite chambre circulaire. Selon un mode de réalisation particulier, les ouvertures de sortie comprennent des passages comprenant un ou plusieurs étranglements qui s'élargissent de manière non aérodynamique. Le dispositif d'alimentation et d'évacuation du ou des fluides permet de maintenir une différence de pression entre les injecteurs de fluide et la cheminée centrale.

Selon un mode de réalisation particulier, ledit dispositif d'alimentation d'un ou plusieurs fluides comprend une chambre d'alimentation de fluide entourant ladite paroi circulaire.

Selon la présente invention, les injecteurs comprennent des passages munis d'étranglements (partie dont la section est étroite) s'élargissant brutalement, de manière non aérodynamique, qui permettent lors de l'utilisation du dispositif, la génération de tourbillons, de préférence de petites dimensions par rapport à l'épaisseur du lit fluidifié, avant que le ou les fluides empruntant ces passages n'entrent en contact avec les particules solides, afin de générer une perte de charge approximativement proportionnelle au carré du débit du ou des fluides permettant de mieux contrôler la distribution des flux du ou desdits fluides le long de la dite paroi circulaire et de la turbulence permettant d'améliorer la fluidisation et l'homogénéité dudit lit fluidifié rotatif.

Lors de la mise en oeuvre du dispositif selon la présente invention, l'expansion du fluide étant non aérodynamique, avec génération de turbulence, la chute de pression du fluide au travers de ces étranglements est environ proportionnelle au carré des flux de fluides passant par ces passages. Le contrôle des débits locaux de ces flux de fluide peut être obtenu au moyen d'une chute de pression relativement petite et la turbulence contribue à améliorer la fluidisation des particules solides et l'homogénéité du lit fluidifié.

Une expansion d'un facteur de préférence au moins égal à deux avec une chute de pression au moins égale au dixième et de préférence au cinquième de la pression centrifuge moyenne des particules solides sur la paroi circulaire permet d'éviter ou de réduire les problèmes de "chenalisation" et d'améliorer substantiellement l'homogénéité du lit fluidifié.

Selon la présente invention, l'injecteur de fluide comprend un passage par lequel le fluide entre dans l'injecteur. Ledit passage comprend un ou plusieurs étranglements.

Selon un mode de réalisation particulièrement préféré, l'invention prévoit un dispositif, dans lequel le rapport entre la section de sortie des injecteurs du ou desdits fluides et la section desdits étranglements est au moins égal à 2.

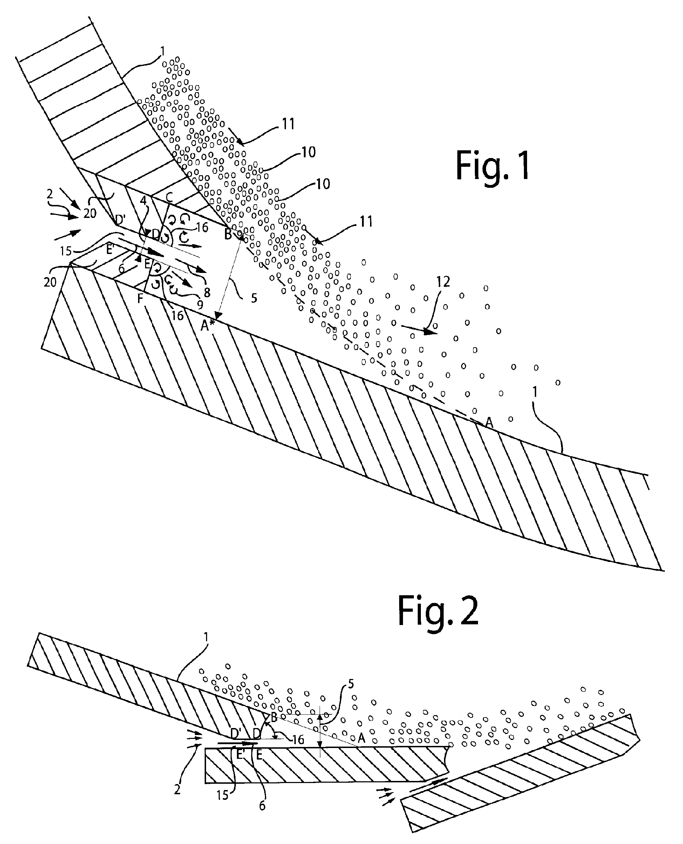

Selon un mode de réalisation, le passage est étroit ou se rétrécit progressivement pour ensuite s'élargir brutalement, de manière non aérodynamique (exemplifiés de manière non-limitative aux figures 1, 2 et 3).

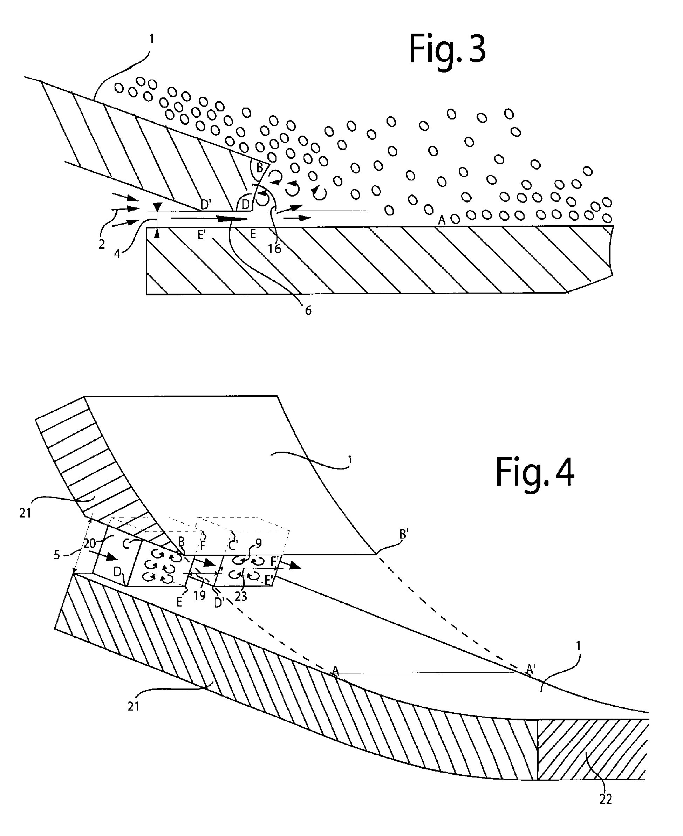

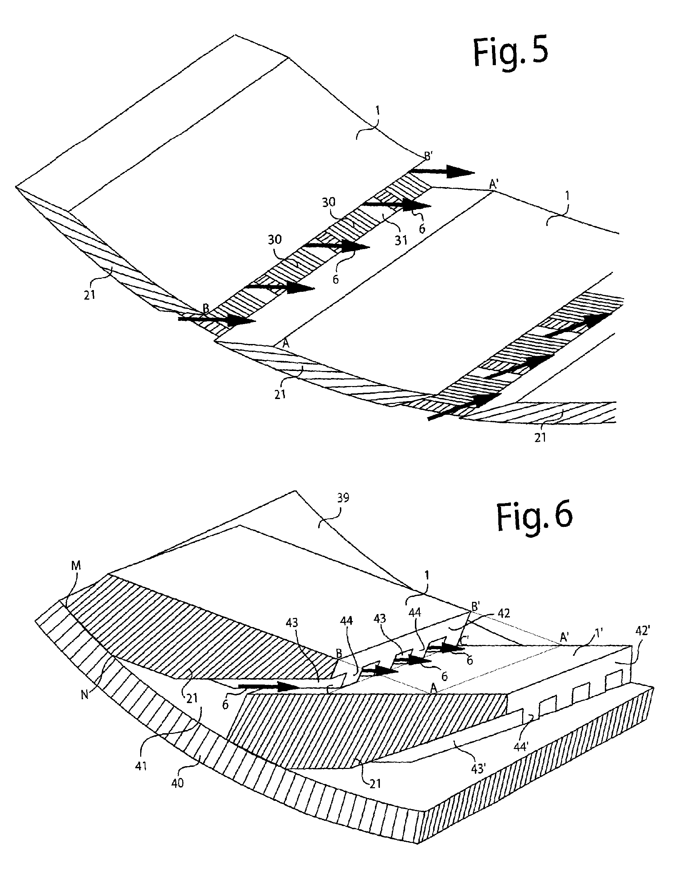

Selon un mode de réalisation, l'injecteur peut également comprendre un passage à dimensions plus ou moins constantes, dans lequel ou devant lequel un ou des blocs ou obstacles sont pourvus, formant un ou plusieurs étranglements (exemplifiés de manière non-limitative aux figures 4 et 6).

Selon la présente invention, l'entrée de l'injecteur peut aussi être partiellement couverte par des anneaux (exemplifiés de manière non-limitative à la figure 5).

Plus particulièrement, selon un mode de réalisation particulier, l'invention se rapporte à un dispositif, dans lequel lesdits étranglements sont obtenus à l'aide d'éléments d'obstruction longitudinaux et/ou transversaux.

Ces éléments d'obstruction peuvent être constitués par la forme structurelle de ladite paroi circulaire.

Dans un autre mode de réalisation, les dits éléments d'obstruction comprennent des blocs longitudinaux placés à l'intérieur desdits passages.

Dans encore un autre mode de réalisation, lesdits éléments d'obstruction comprennent des blocs transversaux placés à l'intérieur desdits passages et divisant les passages en une succession d'étranglements transversaux. De préférence, dans un tel mode de réalisation, les longueurs longitudinales des blocs transversaux sont égales ou supérieures à la longueur des étranglements.

Dans un autre mode de réalisation, lesdits éléments d'obstruction comprennent des anneaux qui sont appliqués contre et à l'extérieur de ladite paroi circulaire, entourent la paroi circulaire, et partiellement couvrent l'ouverture desdits passages.

La présente invention prévoit également, dans un autre mode de réalisation, un dispositif à lit fluidifié rotatif, dans lequel ladite paroi circulaire est formée par une succession de plaques accolées et laquelle paroi est pourvue de surfaces, séparant deux plaques accolées, lesquelles surfaces sont rainurées transversalement formant une succession de passages étroits et d'éléments d'obstructions.

La présente invention se rapporte également à un procédé d'injection de fluide dans un dispositif à lit fluidifié rotatif de particules solides tournant le long d'une paroi circulaire, permettant de réduire de manière significative les problèmes de "chenalisation" décrits ci-dessus , le procédé comprenant l'injection du fluide dans une direction ayant une composante tangentielle à la paroi circulaire dudit dispositif à travers des fentes d'injections comprenant des étranglements s'élargissant brutalement, de manière non aérodynamique, afin de générer une perte de pression et de la turbulence avant la rencontre du fluide et lesdites particules solides. Le procédé permet d'améliorer ainsi la distribution des flux de fluide le long de ladite paroi circulaire et la fluidisation et l'homogénéité dudit lit fluidifié rotatif.

La présente invention se rapporte également à des procédés de polymérisation catalytique, de combustion, de gazéification, de classification, de séchage, d'imprégnation, d'enrobage ou d'autres traitements de particules solides en suspension dans le lit fluidifié rotatif, ou de craquage, de déshydrogénation ou d'autres transformation catalytique de fluides utilisant ce dispositif.

D'autres caractéristiques et exemples de dispositifs suivant la présente invention sont décrits ci-dessous de façon non limitative.

### Brève description des dessins

**La** **figure 1** montre une section transversale d'un exemple de passage ou ouverture d'injection avec un étranglement longitudinal.

**La** **figure 2** montre la section transversale schématique d'une paroi circulaire polygonale traversée par des fentes d'injection de fluide pourvues d'étranglements selon un mode de réalisation particulier de l'invention.

**La** **figure 3** est un agrandissement d'une des fentes illustrée dans la figure 2 afin de mieux visualiser la formation des tourbillons lors de l'utilisation du dispositif selon un mode de réalisation particulier de l'invention.

**La** **figure 4** représente la projection axonométrique schématique d'un tronçon de fente longitudinale pourvue de restrictions transversales dans une paroi circulaire d'un dispositif selon un mode de réalisation particulier de l'invention.

**La** **figure 5** représente une projection axonométrique schématique illustrant une autre façon de disposer les restrictions transversales au niveau des injecteurs d'un dispositif d'injection de fluide selon un mode de réalisation particulier de l'invention.

**La** **figure 6** représente une projection axonométrique schématique illustrant un exemple de restriction à la fois longitudinal et transversal selon un mode de réalisation particulier de l'invention.

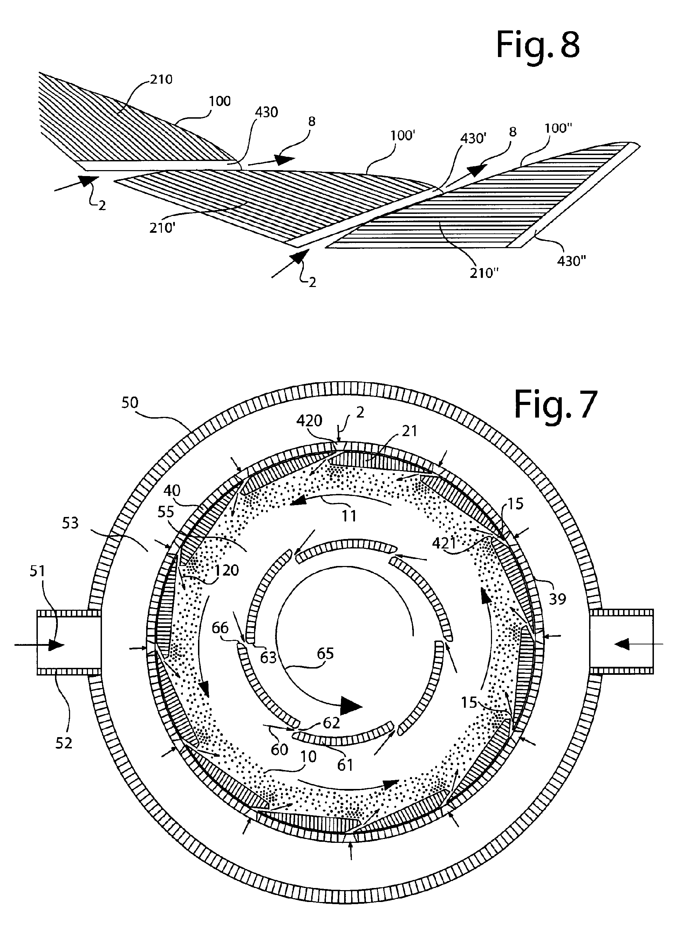

**La** **figure 7** montre la coupe transversale schématique d'un dispositif à lit fluidifié rotatif selon un mode de réalisation particulier de l'invention.

**La** **figure 8** représente une section transversale schématique d'une paroi circulaire de forme ondulée formée de plaques adjacentes dont les surfaces intérieures (100), (100'), (100"), ... ont une courbure concave progressive, selon un mode de réalisation particulier de l'invention.

### Description détaillée

Selon un mode de réalisation préféré, le dispositif selon la présente invention comprend une paroi circulaire extérieure munie d'ouvertures d'injection par où un fluide peut être injecté dans une chambre annulaire qui peut être alimentée en particules solides et dont la paroi circulaire intérieure est munie d'ouvertures de sortie par où le fluide peut être évacué. Selon la présente invention, les ouvertures d'injection comprennent des passages munis d'étranglements (partie dont la section est étroite) s'élargissant brutalement, de manière non aérodynamique, qui permettent lors de l'utilisation du dispositif, la génération de tourbillons de petites dimensions. L'orientation des ouvertures d'injection a une composante tangentielle à ladite paroi circulaire.

Le terme « injecteur de fluide » se réfère à un passage ou ouverture d'injection au travers de la paroi circulaire par où un fluide peut pénétrer à l'intérieur de la chambre circulaire ou annulaire, par exemple lorsque celle-ci est maintenue à une pression inférieure à la pression extérieure dudit passage. Ce passage ou ouverture d'injection peut avoir une forme quelconque, par exemple un tube cylindrique ou de section polygonale. Il est de préférence de forme allongée dans la direction longitudinale (perpendiculaire au plan de rotation). Dans ce cas on parle de « fente d'injection ». Les termes « passage », « ouverture d'injection » ou « fente d'injection » sont utilisés dans certains modes de réalisation de la présente invention comme synonymes.

L'injecteur de fluide comprend une entrée et une sortie. L'étranglement est la partie du passage située entre l'entrée et la sortie, dont la section est minimum.

Normalement la section d'entrée est plus grande que celle de l'étranglement. Dans ce cas il est préférable que cette section varie progressivement de l'entrée jusqu'à l'étranglement, mais ce n'est pas indispensable. Il n'est pas indispensable non plus que la section d'entrée soit plus grande que la section de l'étranglement.

Selon la présente invention, la section de sortie est plus grande que la section de l'étranglement et il y a une zone où cette section croit de manière non aérodynamique, c'est-à-dire avec génération de turbulence.

Les termes « chambre circulaire » ou « chambre de réaction » sont utilisés dans certains modes de réalisation de la présente invention comme synonymes et se réfèrent à une chambre à l'intérieur du réacteur délimitée par une paroi circulaire et des côtés latéraux. La chambre circulaire de réaction peut être une chambre annulaire.

Le terme « chambre annulaire » se réfère à une chambre délimitée par deux parois circulaires concentriques et des côtés latéraux. La paroi circulaire intérieure délimite une chambre circulaire intérieure qui peut être appelée la chambre d'évacuation des fluides ou cheminée centrale. La chambre annulaire est donc une chambre circulaire traversée par une cheminée centrale.

Le terme « cheminée centrale » se réfère à un dispositif permettant d'évacuer centralement le ou les fluides de ladite chambre circulaire. Le mot central signifie que ce dispositif n'est pas en contact direct avec la paroi circulaire extérieure de ladite chambre circulaire. La cheminée centrale ne doit pas nécessairement traverser la chambre circulaire, elle peut simplement à pénétrer à l'intérieur de celle-ci (dans ce cas la chambre circulaire n'est pas une chambre annulaire). Selon un mode de réalisation particulier, la cheminée centrale est reliée à un moteur pouvant la faire tourner.

Le terme « paroi circulaire » indique la paroi circulaire extérieure de la chambre circulaire de réaction. Selon la présente invention la paroi circulaire extérieure est une paroi fermée pourvue d'ouvertures d'injection, le long de laquelle on peut tourner, le plan de rotation pouvant être horizontal, vertical ou incliné. Selon un mode de réalisation particulier, la dite paroi circulaire est reliée à un moteur pouvant la faire tourner. La paroi circulaire peut être de forme générale cylindrique, elliptique, conique ou polygonale ou avoir une autre forme avec des courbures diverses pouvant comprendre des parties concaves. Par exemple sa surface intérieure peut être polygonale ou ondulée et sa forme générale peut être elliptique ou même avoir la forme d'une banane. Par exemple sa surface intérieure comprend des parties planes séparant deux injecteurs de fluide consécutifs. Sa section transversale ne doit pas nécessairement être constante. Par exemple elle peut diminuer progressivement. Dans ce cas, si elle est cylindrique ou polygonale, on peut la définir comme formant un cône ou une pyramide tronquée. Selon un mode de réalisation particulier, la surface séparant deux injecteurs de fluide consécutifs comprend au moins une partie dont la courbure est concave.

La forme polygonale permet une réalisation aisée par assemblage d'éléments plats accolés les uns aux autres ainsi qu'une injection de fluide tangentielle à la partie située en aval des injecteurs Cette surface peut aussi avoir une courbure concave, ce qui donne un aspect ondulé à la surface intérieure de la paroi circulaire. Dans ce cas les injecteurs de fluide se trouvent préférentiellement à l'extrémité de la courbure concave de la surface située en amont afin de réduire et mieux répartir la concentration des solides en amont des injecteurs. La forme polygonale permet d'obtenir le même résultat, si la surface en amont des injecteurs est pliée pour lui donner une forme concave, c'est-à-dire avec un angle intérieur de plus de 180°.

La forme est choisie en fonction des résultats souhaités. Par exemple si la forme de la surface en amont des injecteurs est convexe, la pression des particules solides avant d'entrer en contact avec le fluide injecté en aval est plus élevée que la pression le long d'une surface concave et l'énergie dépensée par le fluide dans le lit fluidifié est d'autant plus élevée que la pression des particules solides sur les jets de fluide est élevée.

Le fluide est alimenté par un dispositif d'alimentation qui peut comprendre une chambre d'alimentation du fluide entourant la chambre annulaire de réaction. La localisation des injecteurs est choisie en fonction des résultats que l'on désire obtenir. Par exemple si la forme de la surface intérieure de la paroi extérieure a une courbure variant progressivement, comme dans une ellipse, ou est ondulée, il en résulte des zones où la pression des particules solides sur cette surface est plus élevée (là où la courbure est forte et convexe) ou plus faible (là où elle est faible ou concave), et donc la localisation des injecteurs dans l'une ou l'autre zone influencera la quantité d'énergie qui est conférée aux particules solides.

Le terme « chambre d'alimentation » (du ou des fluides) se réfère à une chambre entourant la chambre circulaire ou annulaire et où la pression peut être maintenue au-dessus de la pression de la cheminée centrale. Selon la présente invention, la chambre d'alimentation peut avoir une forme quelconque et elle n'est pas indispensable. Elle peut par exemple être remplacée par un distributeur de fluides comprenant un ensemble de tubes reliés chacun à un ou plusieurs injecteurs de fluide, ou tout simplement être remplacée par un dispositif d'aspiration relié à la cheminée centrale. Dans ce dernier cas, le fluide qui est injecté dans la chambre annulaire est tout simplement le fluide entourant la chambre annulaire, par exemple l'air ambiant pour les applications de séchage ou le liquide extérieur, par exemple l'eau d'un bassin dans lequel la chambre circulaire est plongée.

Selon un mode de réalisation de la présente invention, la chambre circulaire comprend une paroi circulaire extérieure et une paroi circulaire intérieure (définissant la cheminée centrale). Selon un mode de réalisation particulier, les parois circulaires extérieure et intérieure sont fixes. Selon un autre mode de réalisation particulier, la paroi circulaire extérieure est fixe et la paroi circulaire intérieure est reliée à un moteur pouvant la faire tourner (cheminée rotative). Selon un troisième mode de réalisation particulier, les deux parois circulaires extérieure et intérieure sont reliées à un moteur pouvant les faire tourner ensemble (chambre annulaire rotative).

Les ouvertures d'injection permettent d'injecter le fluide dans une direction dont la composante principale est tangentielle et de préférence supérieure au double de la composante radiale ou longitudinale (ce qui est équivalent à un angle inférieur ou égal à 30° avec la tangente à la paroi circulaire du côté situé en aval des dites ouvertures d'injection de fluide).

Selon un mode de réalisation particulier, le dispositif suivant la présente invention est caractérisé en ce que les ouvertures d'injection comprennent un étranglement, dont la section est de préférence inférieure à la moitié de la section de sortie (c'est-à-dire de l'entrée dans la chambre circulaire). Selon un mode de réalisation particulier, le dispositif suivant la présente invention est caractérisé en ce que le passage de l'étranglement à la section de sortie, c'est-à-dire l'élargissement de l'ouverture se fait brutalement, c'est-à-dire avec un angle d'expansion supérieur à 60°, de préférence dans l'intervalle de 90° +/- 15°, le long d'une arête vive, c'est-à-dire dont le rayon de courbure est petit (de préférence au moins 5 fois plus petit) par rapport à la largeur de l'ouverture.

Les ouvertures d'injection sont de préférence régulièrement réparties, c'est-à-dire que toute tranche de la chambre annulaire d'une longueur (dimension longitudinale) égale à la moitié de la distance moyenne entre les deux parois circulaires (ce qui correspond plus ou moins à l'épaisseur normale du lit fluidifié) contienne un nombre suffisant d'ouvertures d'injection pour que la distance entre deux ouvertures d'injection consécutives soit inférieure ou égale au rayon moyen de la paroi circulaire extérieure, et de préférence inférieure au double de la distance moyenne entre les deux parois circulaires. Le nombre minimum préféré d'ouvertures d'injection dépend donc du rayon moyen de la paroi circulaire intérieure ou de la cheminée centrale. Selon un mode de réalisation particulier, la distance séparant lesdits injecteurs est inférieure ou égale au rayon moyen de ladite paroi circulaire. Selon un mode de réalisation particulier, il est d'au moins 6, si ce rayon moyen est égal à la moitié du rayon moyen de la paroi circulaire extérieure, mais il peut être beaucoup plus élevé si ce rayon moyen est proche du rayon de la paroi extérieure.

Selon un mode de réalisation particulier, le dispositif suivant la présente invention est caractérisé en ce que la ou les dites ouvertures de sortie (ou ouvertures d'évacuation) sont telles que la somme de leurs sections est inférieure au double de la somme des sections des ouvertures d'injection. Cela permet que la vitesse de sortie du fluide ne soit pas sensiblement plus petite que sa vitesse d'entrée. Cette vitesse de sortie peut être beaucoup plus grande que la vitesse d'entrée.

Selon un mode de réalisation particulier, le dispositif suivant la présente invention est caractérisé en ce que la ou les dites ouvertures de sortie sont réparties de telles sortes qu'il n'y en a pas le long des parois latérales de la chambre annulaire sur une longueur de préférence d'au moins un cinquième de la distance moyenne entre les deux parois circulaires. Cela permet de minimiser les pertes de particules par ces ouvertures de sortie le long des parois latérales.

Selon un mode de réalisation particulier, le dispositif suivant la présente invention est caractérisé en ce que la ou les dites ouvertures de sortie sont pourvues d'étranglements similairement aux ouvertures d'injection.

Selon un autre mode de réalisation particulier, le dispositif suivant la présente invention est caractérisé en ce que la distance séparant lesdites ouvertures de sortie est inférieure ou égale au rayon moyen de la paroi circulaire intérieure (paroi de la cheminée).

La présente invention consiste à placer, à l'intérieur des injecteurs de fluide traversant la paroi circulaire supportant un lit fluidifié rotatif, des étranglements s'élargissant brutalement, de manière non aérodynamique, et donc générant une perte de pression dynamique et de la turbulence avant la rencontre du fluide et des solides. Les étranglements peuvent être formés à l'aide d'éléments d'obstruction tels que des restrictions ou des blocs. Le terme « restriction » est utilisé de façon interchangeable avec le terme « bloc ». Ces deux termes sont synonymes.

Dans la présente invention, lorsque les injecteurs de fluides sont de longues fentes longitudinales traversant la paroi circulaire, ces étranglements peuvent être transversaux, c'est-à-dire divisant le flux de fluide en tranches transversales, ou être longitudinaux, c'est-à-dire amincissant le flux de fluide sur toute la longueur de la fente. Ils peuvent aussi être une combinaison des deux types.

Le rapport entre la section de sortie des injecteurs de fluide et la section desdits étranglements est de préférence au moins égal à 2.

La **figure 1** montre la section transversale d'un exemple de passage à l'intérieur d'une fente d'injection de fluide traversant la paroi circulaire (1) d'une chambre circulaire d'un réacteur, le passage comprenant un étranglement longitudinal, s'élargissant brutalement, de manière non aérodynamique.

Le fluide (2) provient d'une chambre d'alimentation non représentée sur la figure, située à l'extérieur de la paroi circulaire (1) et maintenue à une pression suffisante pour injecter à l'intérieur de la chambre circulaire la quantité voulue de fluide. Le fluide est injecté tangentiellement dans la chambre circulaire par une fente longitudinale (ou ouverture d'injection) (15), perpendiculaire au plan de la figure et percée au travers de la paroi circulaire (1). Cette fente (15) comprend un étranglement D'DEE', de largeur (4) s'élargissant abruptement, c'est-à-dire de manière non aérodynamique, à une largeur (5). L'étranglement D'DEE' est formé par les éléments d'obstructions (20). De préférence, l'étranglement a une section qui est inférieure à la moitié de la section de sortie (c'est-à-dire de l'entrée dans la chambre annulaire du dispositif à lit fluidifié), le passage de l'étranglement à la section de sortie, c'est-à-dire l'élargissement de l'ouverture se faisant brutalement, c'est-à-dire avec un angle d'expansion (16) supérieur à 60°, de préférence dans l'intervalle de 90° +/- 15°, le long d'une arête vive, c'est-à-dire dont le rayon de courbure est petit (de préférence au moins 5 fois plus petit) par rapport à la largeur de l'étranglement.

Le fluide (2) est fortement accéléré à l'intérieur de l'étranglement D'DEE', où il atteint une vitesse maximum, symbolisée par la dimension de la flèche (6). Il est ensuite brutalement ralenti à une vitesse (8), à la sortie de l'étranglement, avec la production d'une forte turbulence, symbolisée par les flèches (9), avant de pénétrer dans la chambre circulaire et d'y rencontrer les particules solides, symbolisées par les ronds (10), qui tournent en glissant le long de la paroi circulaire (1) dans la direction des flèches (11).

La pression du fluide chute à l'intérieur de l'étranglement D'DEE' et si une petite partie de son énergie cinétique est récupérée sous forme de pression au moment de sa sortie du goulot, la plus grande partie est transformée en turbulence en raison du manque d'aérodynamisme de l'élargissement de l'ouverture à la sortie de l'étranglement. La chute de pression est approximativement proportionnelle au carré de la vitesse (6) du fluide dans l'étranglement et donc proportionnelle au carré du rapport entre la largeur (5) et la largeur (4). Ainsi pour un rapport égal à 3, la chute de pression est environ 9 fois plus grande que celle qui aurait été obtenue s'il n'y avait pas eu d'étranglement ou si le profil de la sortie de l'étranglement avait été aérodynamique (variation progressive de la section avec arrondis afin d'éviter ou de minimiser la turbulence).

La chute de pression due à l'injection du fluide est aussi proportionnelle au carré du débit du fluide passant en cet endroit. Ce débit du fluide dépend de la pression centrifuge du lit fluidifié et donc de la densité, de la vitesse et de la concentration des particules solides passant devant l'ouverture AB de la fente d'injection du fluide. Ainsi, dans les zones où il n'y a pas ou peu de particules solides devant l'ouverture AB, le débit du fluide est maximum et donc la chute de pression au travers de l'injecteur y est maximum.

Si une quantité importante de particules solides, symbolisées par les ronds (10) glissent rapidement dans la direction (11) le long de la paroi circulaire (1), elles vont rencontrer le flux de fluide sortant de la fente d'injection du fluide et constituer une barrière qui va en réduire le débit et donc sa vitesse (6) et donc la chute de pression et donc augmenter localement la pression de sortie du fluide à l'intérieur du réacteur, proportionnellement au carré des vitesses (une diminution de 30% du débit du fluide diminue la chute de pression de 50%).

Si cette augmentation de pression n'est pas négligeable par rapport à la pression centrifuge des particules solides sur la paroi circulaire, une quantité importante du fluide va traverser la barrière des solides en les accélérant et en les dispersant, donc en les fluidifiant, principalement dans une direction tangentielle (12).

La fluidisation des particules solides est également améliorée par l'énergie du fluide contenue dans la turbulence (9), qui contribue à les disperser principalement radialement, mais aussi longitudinalement vers les zones contenant moins de solides.

La pression à la sortie de l'injecteur de fluide étant plus élevée dans les zones faisant face à une concentration importante de particules solides, une partie du fluide peut se déplacer longitudinalement, c'est-à-dire perpendiculairement au plan de la figure, le long de la fente d'injection, avant de rencontrer les particules solides et donc contribuer à la "chenalisation annulaire" de l'écoulement du fluide. Pour éviter que cette quantité de fluide soit importante, il est souhaitable que la largeur (5) de la fente d'injection de fluide fois la distance moyenne entre la sortie du goulot (DE) et le front de particules solides (AB) ne soit pas sensiblement et de préférence moins de deux fois plus grande que la section de l'étranglement, soit sa largeur (4) fois sa longueur (perpendiculaire au plan de la surface). Et si la longueur de la fente est très grande par rapport à l'épaisseur du lit fluidifié, il est également souhaitable d'y introduire des étranglements transversaux, (voir les figures de 4 à 6).

La **figure 2** montre la section transversale d'une paroi circulaire (1) polygonale traversée par des fentes d'injection de fluide (15) où les distances BC et EF de la figure 1 ont été réduites à zéro et la **figure 3** est un agrandissement d'une de ces fentes afin de mieux visualiser la formation des tourbillons.

Pour que la formation de tourbillons et donc la chute de pression au travers de l'injecteur soit significative il faut que l'arrête D soit vive ou ait un rayon de courbure d'un cinquième inférieur à la largeur (4) de l'étranglement et que l'angle D soit inférieur à 135° et de préférence inférieur ou égal à 120°. L'angle d'expansion (16) est de préférence supérieur à 60°, de préférence dans l'intervalle de 90° +/- 15°.

Pour éviter que les particules solides rencontrent le fluide avant la formation de tourbillons il est souhaitable que la distance BD soit au moins égale à la largeur (4) de l'étranglement et que l'angle B soit inférieur à 135° et de préférence inférieur ou égal à 90°.

Les tourbillons étant principalement dans un plan transversal, ils vont contribuer à la fluidisation des particules solides principalement dans des plans transversaux et donc réduire principalement la possibilité de formation de chenaux longitudinaux rotatifs.

La possibilité qu'a le fluide de se déplacer longitudinalement le long des fentes d'injection avant la rencontre de particules solides réduit l'influence de ces types d'étranglement longitudinaux sur la "chenalisation annulaire" de l'écoulement du fluide.

La **figure 4** est la projection axonométrique d'un tronçon de fente longitudinale, de largeur (5), traversant la paroi circulaire (1) d'une chambre circulaire et munie de restrictions transversales ou blocs (20) divisant la fente longitudinale en une succession d'étranglements transversaux ou tranches de même largeur que la largeur (5) la fente et de longueur (19) (dans le sens longitudinal) et donc forçant le fluide à se diviser en tranches transversales passant dans les étranglements transversaux formés par ces restrictions ou blocs (20) avant de se détendre longitudinalement avec la formation de tourbillons (9) devant les faces CDEF et C'D'E'F' de ces blocs qui sont en retrait par rapport à la surface AA'B'B qui est l'intersection de la fente longitudinale avec la surface circulaire de la chambre circulaire.

Les surfaces hachurées (21) et (22) représentent les sections visibles, respectivement transversales et longitudinales, du tronçon de la paroi circulaire (1).

Comme pour les restrictions longitudinales, les restrictions transversales augmentent la chute de pression au travers des fentes d'injection du fluide, ce qui réduit les variations de débit du fluide le long de la fente, et génère de la turbulence qui contribue à fluidifier les particules solides et à les répartir le long de la surface circulaire de la chambre circulaire. Toutefois les tourbillons étant principalement dirigés dans des directions longitudinales, ils améliorent principalement la dispersion longitudinale des particules solides et donc ils contribuent principalement à réduire la tendance à la "chenalisation annulaire" de l'écoulement du fluide.

Les longueurs longitudinales (23) de ces restrictions ou blocs transversaux peuvent être plus ou moins grandes. Elles sont de préférence au moins égale à la longueur longitudinale (19) des étranglements par où passe le fluide. Le retrait de ces restrictions ou blocs transversaux (20) détermine la distance moyenne séparant la sortie de ces étranglements des points de rencontre du fluide avec les particules solides. Cette distance moyenne est de préférence inférieure à la longueur (23) de ces blocs transversaux (20) pour éviter un important déplacement longitudinal du fluide avant sa rencontre avec les solides et est de préférence au moins égale à la longueur (19) des étranglements pour que les tourbillons puissent se former avant la rencontre du fluide et des particules solides.

La **figure 5** est une projection axonométrique illustrant une autre façon de disposer les restrictions transversales qui deviennent des anneaux (30), dont les surfaces ont été hachurées pour mieux les distinguer de la paroi circulaire (1). Les surfaces hachurées (21) représentent les sections visibles transversales du tronçon de la paroi circulaire (1). Ils sont appliqués contre et à l'extérieur de la paroi circulaire (1) traversée longitudinalement par de longues fentes dont la largeur et l'inclinaison ont été intentionnellement exagérées afin de pouvoir visualiser les anneaux extérieurs. Les étranglements (31) sont la section entre les anneaux (30) et les fentes longitudinales. Le principe est le même, mais cette disposition permet d'assembler aisément la paroi circulaire formées de plaques longitudinales s'appuyant sur les côtés transversaux d'une chambre circulaire cylindrique ou polygonal et séparées par des fentes par où le fluide peut être injecté après être passé entre les anneaux extérieurs (30) entourant la paroi circulaire.

Les restrictions transversales et longitudinales peuvent être combinées. Par exemple, la **figure 6** illustre un exemple de restriction à la fois longitudinal et transversal. C'est une projection axonométrique de plaques (1), (1'), ... s'appuyant les unes sur les autres afin de former une paroi circulaire polygonale. Les surfaces hachurées (21) représentent les sections visibles transversales du tronçon de la paroi circulaire polygonale formée par les plaques (1'), (1), .... Les extrémités extérieures (NM) de ces plaques sont fixées contre une paroi cylindrique (39), dont les bords sectionnés (40) sont hachurés, qui entoure la paroi circulaire polygonale et par où le fluide est alimenté. Les tubes d'alimentation du fluide au travers de la paroi (39) ne sont pas montrés sur la figure. Les chambres d'alimentation (41) du fluide sont les espaces situés entre la paroi (39) et les plaques (1), (1'),...

Les extrémités intérieures (BB') de ces plaques (1), (1'), ... sont tronquées pour former des plans longitudinaux (42), (42'), ... approximativement perpendiculaires aux plans des surfaces polygonales (1), (1'), ....

La surface séparant les deux plaques accolées est rainurée transversalement afin de former des canaux (43), (43'), ... et des éléments d'obstruction (44), (44'), ... constituant les étranglements par où le fluide peut pénétrer à l'intérieur de la chambre circulaire. Le fluide en sortant de ces canaux (43), (43'), ... se détend à la fois longitudinalement et radialement avant de rencontrer les particules solides qui glissent le long des surfaces (1), (1'), ... de la paroi circulaire polygonale, ce qui favorise une bonne dispersion et une bonne fluidisation des particules solides dans toutes les directions, tout en leur transférant une quantité de moment cinétique tangentiel qui les fait tourner le long de la paroi circulaire.

Les vitesses (6) importantes que le fluide peut atteindre avant d'être ralenti par son expansion et avant de rencontrer les particules solides peuvent être élevées et donc générer une perte de pression au travers de ce type d'injecteur de fluide qui est du même ordre de grandeur que la perte de pression du fluide au travers du lit fluidifié, ce qui assure une répartition relativement homogène du fluide le long de la paroi circulaire.

Il a été observé par expérimentation et par simulation qu'une chute de pression moyenne d'un dixième de la chute de pression du fluide au travers du lit fluidifié ou d'un cinquième de la pression centrifuge des particules solides sur la paroi circulaire obtenue à l'aide d'étranglements semblables à ceux qui sont décrites dans les figures de 1 à 6 et 8, réduisant localement la section des injecteurs de fluide, permettait d'éviter ou de réduire significativement le risque de la formation de chenaux annulaires ou longitudinaux rotatifs par où la majorité du fluide pouvait s'échapper.

La **figure 8** illustre une variante de la figure 6, ou les plaques (1), (1'), ... sont remplacées par des plaques adjacentes dont les surfaces intérieures (100), (100'), (100"),...ont une courbure concave progressive. Les surfaces hachurées (210), (210'), (210"),...représentent les sections visibles transversales du tronçon de la paroi circulaire de surface intérieure ondulée (100), (100'), (100"),....

Selon un mode de réalisation particulier, la surface séparant les plaques adjacentes est rainurée transversalement afin de former des canaux (430), (430'), (430"),... constituant les étranglements par où le fluide (2) peut pénétrer à l'intérieur de la chambre circulaire. Le fluide (2) est fortement accéléré à l'intérieur des canaux (430), (430'), (430"), ... où il atteint une vitesse maximum, et il est ensuite brutalement ralenti à une vitesse (8) à la sortie des canaux (430), (430'), (430"),....

Cette forme ondulée des surfaces (100), (100'), (100"),...et la position des rainures (430), (430'), (430"), ... en aval des courbures concaves permet d'éviter l'accumulation des particules solides en amont des fentes d'injection. Elles auront tendance à se répartir le long d'une certaine longueur du jet de fluide (2) en face de chaque sortie.

En effet, la forme concave dont la courbure progressive est maximum en amont et à proximité des injecteurs de fluide génère une force centripète sur les particules solides qui glissent le long de cette surface. Cette force centripète compense partiellement la pression centrifuge des particules solides à l'intérieur du lit fluidifié, réduisant ainsi la concentration des particules solides en amont des injecteurs. Dès lors, la rencontre entre les flux concentrés de particules solides et les jets de fluide se déplace vers l'aval des injecteurs de fluide et se répartit sur une plus longue surface. Elle est donc plus progressive, ce qui est favorable lorsque la résistance mécanique des particules solides est une contrainte limitative.

Par contre, s'il est souhaitable de soumettre les particules solides à des variations brutales de pression, par exemple pour lutter contre des forces de cohésion ou favoriser les transferts de masse, une courbure convexe est préférable.

Les surfaces polygonales peuvent être préférées pour leur facilité de fabrication.

La **figure 7** montre la section transversale d'un exemple de dispositif selon un mode de réalisation particulier de l'invention. Ce dispositif comprend une chambre annulaire (55) délimitée par une paroi circulaire extérieure et une paroi circulaire intérieure.

La paroi circulaire extérieure de la chambre de réaction est composée d'une paroi extérieure cylindrique (39) dont les bords sectionnés (40) sont hachurés, et qui est tapissée par des plaques longitudinales (comme à la figure 6) donnant une forme polygonale à la surface intérieure de la paroi circulaire extérieure. Les surfaces hachurées (21) représentent les sections visibles transversales de la paroi polygonale formée par les plaques. Selon un autre mode de réalisation, la paroi extérieure cylindrique peut aussi être composée d'une succession d'anneaux cylindriques (30) séparés par des fentes transversales (31) (comme à la figure 5).
La paroi extérieure cylindrique (39) est percée d'ouvertures d'injection (420) (correspondant aux fentes transversales (31) de la figure 5) débouchant sur des fentes longitudinales (15) séparant les plaques longitudinales et s'élargissant brutalement, suivant la surface longitudinale de section (421) (correspondant aux plans longitudinaux (42) de la figure 6) formant des angles de 90° avec les parois des fentes longitudinales (15). Le profil de ces ouvertures d'injection comprend donc un étranglement suivi d'un premier élargissement brutal dans la direction longitudinale (perpendiculaire au plan de la figure) et ensuite d'un deuxième élargissement brutal dans une direction transversale (principalement radiale).

Selon un autre mode de réalisation non illustré, la forme pourrait être cylindrique et l'ensemble peut être obtenu à partir d'un tube cylindrique à moitié percé par des ouvertures (420) débouchant sur des fentes (15).

La paroi circulaire intérieure (délimitant une cheminée centrale) est formée de plaques longitudinales courbes (61) espacées par des fentes ou ouvertures de sortie (62) qui ont une partie étroite s'élargissant brutalement le long des côtés (63) et (66). Selon un mode de réalisation préféré de ce dispositif, la paroi circulaire intérieure peut tourner dans le sens de la flèche (65).

Des particules solides (10), poussées par les jets de fluide (120) les faisant tourner dans la direction (11), sont montrées pour illustrer le fonctionnement du dispositif. La force centrifuge les pousse vers la paroi circulaire extérieure. Elles sont ralenties et se concentrent en amont des jets de fluide (120) et elles sont ensuite accélérées et dispersées par ces jets en aval de ces jets. Elles subissent donc alternativement une phase de ralentissement et de compression suivie d'une phase d'accélération et de détente, et donc, si les particules solides sont poreuses, ces variations de pression périodiques améliorent considérablement les transferts de masse entre la phase fluide et la phase solide. Le fluide (60) est évacué par les fentes (62).

Une seconde paroi cylindrique extérieure (50) délimitant une chambre d'alimentation (53) pouvant être alimentée en fluide (51) par des tubes (52) complète le dispositif. Cette chambre d'alimentation peut être maintenue à une pression permettant d'injecter le fluide (2) dans la chambre annulaire (55) par les ouvertures (420).

D'autres dispositifs d'alimentation du fluide sont possibles. Par exemple un distributeur de fluide connecté à chaque ou à des ensembles d'ouvertures (420). Il est également possible de se passer du dispositif d'alimentation de fluide, par exemple si le dispositif d'évacuation du fluide comprend un compresseur ou une pompe permettant d'aspirer le fluide environnant (par exemple de l'air pour un procédé de séchage ou de l'eau pour un procédé de purification de l'eau) par les ouvertures d'injection (420).

Dans un premier mode de réalisation, la paroi circulaire extérieure et la paroi circulaire intérieure sont fixes. Dans un second mode de réalisation, la paroi circulaire extérieure est fixe et la paroi circulaire intérieure est rotative. Dans un troisième mode de réalisation, la paroi circulaire intérieure et la paroi extérieure cylindrique sont rotatives (chambre annulaire rotative) c.-à-d. que la paroi circulaire extérieure peut tourner en même temps que ladite paroi circulaire intérieure.

Le dispositif comprend aussi un dispositif d'alimentation de particules solides.

Les particules peuvent aussi être en suspension dans le fluide qui est aspiré par les fentes (420).

Le dispositif comprend aussi un dispositif d'évacuation du fluide par une cheminée centrale, ainsi que des moyens permettant d'assurer l'étanchéité de l'ensemble en cas de rotation.

D'une manière générale selon la présente invention, les étranglements non aérodynamiques par où le fluide doit passer avant de rencontrer les particules solides peuvent aussi être dans des injecteurs de fluide qui n'ont pas la forme allongée de fentes d'injection mais qui sont des tubes dont la section peut avoir une forme quelconque (ronde, carrée, trapézoïdale,...), dans la mesure où leur nombre est suffisant pour que les dimensions des inhomogénéités longitudinales des flux de fluide le long de la surface circulaire soient inférieures à l'épaisseur du lit fluidifié, et donc que la distance longitudinale séparant ces tubes d'injection soit de préférence inférieure à l'épaisseur du lit fluidifié.

Le dispositif selon la présente invention permet l'injection de fluide dans un lit fluidifié rotatif tournant le long d'une paroi circulaire, fixe ou rotative, au moyen d'injecteurs de fluide, répartis autour de ladite paroi circulaire, permettant d'injecter le ou lesdits fluides en une succession de couches qui longent ladite paroi circulaire et comprenant des étranglements, s'élargissant brutalement, de manière non aérodynamique, avec génération de turbulence avant la rencontre du ou desdits fluides avec les particules solides dudit lit fluidifié rotatif.

La présente invention concerne donc aussi une procédé pour contrôler la distribution des flux de fluides et minimiser les phénomènes de chenalisation dans un lit fluidifié rotatif de particules solides tournant le long d'une paroi circulaire, fixe ou rotative, comprenant l'injection du ou desdits fluides au moyen d'injecteurs de fluide, répartis autour de la dite paroi circulaire, lesdits injecteurs comprenant des étranglements s'élargissant brutalement de manière non aérodynamique.

Le procédé selon la présente invention permet lors de l'injection de générer des turbulences de petites dimensions par rapport à l'épaisseur du lit fluidifié, avant que le ou les fluides empruntant ces passages n'entrent en contact avec les particules solides. Ceci génère une perte de charge approximativement proportionnelle au carré du débit du ou des fluides aux niveaux des étranglements permettant de mieux contrôler la distribution des flux du ou desdits fluides le long de la dite paroi circulaire et de la turbulence permettant d'améliorer la fluidisation et l'homogénéité dudit lit fluidifié rotatif. De préférence, la turbulence consiste en des tourbillons de petites dimensions par rapport à l'épaisseur du lit fluidifié.

Selon un mode de réalisation particulier, le procédé comprend l'étape qui consiste à injecter un ou des fluides, dans une chambre circulaire d'un réacteur, au moyen d'injecteurs de fluide, répartis autour de la dite paroi circulaire, lesdits injecteurs comprenant des étranglements s'élargissant brutalement de manière non aérodynamique, engendrant une chute de pression proportionnelle au carré de la vitesse du fluide dans les étranglements. Selon un mode de réalisation particulier du procédé, la composante principale de la direction d'injection est tangentielle et de préférence supérieure au double de la composante radiale ou longitudinale. De préférence, la direction d'injection forme un angle aigu, de préférence un angle inférieur ou égal à 30° avec la tangente à la paroi circulaire du côté situé en aval desdits injecteurs de fluide.

De préférence, le fluide injecté subit une expansion non aérodynamique d'un facteur au moins égal à deux avec une chute de pression au moins égale au dixième de la chute de pression moyenne du fluide au travers du lit fluidifié, ou alternativement, la chute de pression est au moins égale au cinquième de la pression centrifuge moyenne des particules solides sur la paroi circulaire.

Un dispositif suivant la présente invention peut de manière avantageuse être utilisé dans différents procédés. C'est pourquoi la présente invention concerne aussi des procédés de polymérisation catalytique, de combustion, de gazéification, de classification, de séchage, d'imprégnation, d'enrobage ou d'autres traitements de particules solides en suspension dans le lit fluidifié rotatif, ou de craquage, de déshydrogénation ou d'autres transformations catalytiques de fluides utilisant ce dispositif.

Plus en particulier, l'invention se rapporte à un procédé de polymérisation catalytique, de combustion, de gazéification, d'imprégnation, de classification ou de séchage ou autres traitements de particules solides en suspension dans un lit fluidifié rotatif ou de transformation catalytique de fluides traversant le dit lit fluidifié rotatif, caractérisé en ce qu'il comprend l'étape qui consiste à injecter un ou des fluides, dans une chambre circulaire d'un réacteur, au moyen d'injecteurs de fluide, répartis autour de la dite paroi circulaire, lesdits injecteurs comprenant des étranglements s'élargissant de manière non aérodynamique, générant une chute de pression approximativement proportionnelle au carré de la vitesse du fluide dans les étranglements. Selon un mode de réalisation particulier du procédé, la composante principale de la direction d'injection est tangentielle et de préférence supérieure au double de la composante radiale ou longitudinale. De préférence, la direction d'injection forme un angle aigu, de préférence un angle inférieur ou égal à 30° avec la tangente à la paroi circulaire du côté situé en aval desdits injecteurs de fluide.

La présente invention se rapporte aussi à l'utilisation d'un dispositif décrit dans la présente invention dans un procédé de polymérisation catalytique, de combustion, de gazéification, de séchage, d'imprégnation ou de classification de particule solides. La présente invention concerne également l'utilisation d'un dispositif décrit dans la présente invention dans un procédé de transformation catalytique d'un fluide ou mélange de fluides traversant un lit fluidifié rotatif dont les particules solides sont des catalyseurs. La présente invention concerne aussi l'utilisation d'un dispositif décrit dans la présente invention dans un procédé de séchage ou d'extraction de composants volatils des dites particules solides. Un dispositif suivant la présente invention peut également être utilisé dans un procédé d'imprégnation ou d'enrobage des dites particules solides.

### Exemples

### EXEMPLE 1

Un réacteur cylindrique de 24 cm de diamètre et 115 mm de long a été alimenté à la pression atmosphérique par environ 250 litres d'air par seconde au travers de 24 fentes d'environ 2,3 mm de largeur traversant la paroi cylindrique sur toute sa longueur et injectant le fluide (dans le présent exemple un gaz) dans une direction moyenne formant un angle de 20° avec la paroi, à une vitesse moyenne d'environ 40 m/sec.

Lors de l'introduction progressive de particules solides d'environ 300 microns à l'intérieur du réacteur il a été observé que les particules se concentraient le long d'une ou des deux parois latérales du réacteur, ce qui favorisait leur perte par la cheminée centrale et empêchait la formation d'un lit fluidifié stable. La différence de pression le long de la surface cylindrique intérieure de la paroi du réacteur entre le côté où s'accumulaient les particules solides et le milieu du réacteur était de l'ordre de 1000 Pascals, ce qui indique que la grande majorité du gaz passait par le milieu du réacteur où la pression était plus faible et que le tourbillon formé par ce gaz tournant autour de la cheminée centrale supportait l'accumulation des particules solides le long des parois latérales et les faisait tourner en les empêchant de s'accumuler le long du milieu de la paroi cylindrique, la pression de ces particules sur les extrémités des fentes d'injection du gaz empêchant la sortie du gaz le long des parois latérales. La distribution du gaz devenait ainsi inhomogène en se concentrant dans la tranche annulaire au milieu du réacteur. On obtenait ainsi une circulation du gaz et des particules solides dans des tranches annulaires voisines comme dans les réacteurs de type "Tornado".

Quatre bandes adhésives de 18 mm de large on été disposées à l'extérieur de la paroi cylindrique du réacteur pour former des restrictions ou étranglements transversaux, du type décrit par la figure 5, où la vitesse moyenne du fluide était multipliée par 2,7 environ. Les particules solides ne se sont plus accumulées le long des parois latérales. Elles se sont réparties longitudinalement le long de la paroi cylindrique et la différence de pression entre le centre et les côtés a disparu, permettant ainsi la formation d'un lit fluidifié mince, relativement homogène et stable.

### EXEMPLE 2

Un réacteur de 54 cm de diamètre, entouré d'une chambre de distribution de fluide maintenue à pression constante a été simulé en 2 dimensions. Il est alimenté au travers de 36 fentes d'injection de 4 mm de large injectant de l'air à une vitesse moyenne d'environ 14m/sec, soit un débit d'environ 2 m²/sec. Des particules de polyéthylène de 300 microns y sont introduites progressivement. La chute de pression moyenne au travers des fentes d'injection d'air étant très faible, environ 180 Pascal, par rapport à la pression centrifuge moyenne des particules solides d'environ 1800 Pascal, on observe la formation de "chenalisation longitudinale rotative".

Les fentes d'injection sont transformées :
1 - Réduction de leur largeur à 3 mm : la chute de pression moyenne au travers des fentes d'injection et la vitesse des particules solides augmentent, mais la "chenalisation rotative" ne diminue presque pas.
2 - Installation d'un étranglement de 1,6 mm de large suivi d'une expansion du type Venturi, avec un angle d'expansion d'environ 40°: la chute de pression avant l'introduction des particules solides dépasse les 1000 Pascal. Ensuite un lit fluidifié dense est formé: la vitesse des particules solides augmente de 40% environ par rapport au cas initial, générant une pression centrifuge moyenne des particules solides d'environ 4600 Pascal et une chute de pression totale d'environ 7000 Pascal. La différence est due à l'énergie dépensée par le fluide pour fluidifier le lit de particules solides et le maintenir à une vitesse de rotation d'environ 5 tours par seconde. La chenalisation rotative diminue fortement, mais ne disparaît pas.
3 - Installation d'un étranglement de 0,5 mm du type de la figure 2 ou 3: la chute de pression avant l'introduction des particules solides est d'environ 19 000 Pascal. La chute de pression totale monte à 24 000 Pascal après la formation d'un lit fluidifié très dense, très stable, homogène, sans perte de particules solides par la cheminée centrale, sans chenalisation rotative, avec une pression centrifuge moyenne d'environ 4800 Pascal et une vitesse moyenne des particules solides d'environ 50 % supérieure au cas initial.
4 - installation d'un étranglement de 1,25 mm, suivi d'une expansion brutale, avec un angle de 90°, du type de la figure 1: la chute de pression avant l'introduction des particules solides est d'environ 1400 Pascal et il n'y a pas de formation de chenalisation rotative. On peut obtenir un lit fluidifié très dense, très stable et avec pratiquement pas de pertes de particules solides par la cheminée centrale. La vitesse moyenne des particules solides est d'environ 25% supérieure au cas initial, la pression centrifuge moyenne des particules solides est d'environ 3600 Pascal et la chute de pression totale est d'environ 6300 Pascal. La différence entre les deux est due à l'énergie qui est transférée par le fluide aux particules solides pour les maintenir à une vitesse de rotation d'environ 4,5 tours par seconde.

Ce dernier cas montre qu'il n'est pas nécessaire d'avoir des chutes de pression dans les fentes d'injection aussi importantes que dans le cas 3 pour faire disparaître la chenalisation rotative, mais qu'il est nécessaire qu'elle soit suffisamment élevée, un peu plus de 20% de la chute de pression totale dans cet exemple, et l'influence favorable de la turbulence.

D'autres simulations, notamment avec des particules de verre de 70 microns ont été faites. Dans un cas, avec un nombre de fentes d'injection de fluide réduit à 18, une vitesse d'injection d'air de 28 m/s et avec des étranglements de type Venturi identiques à ceux du cas 2 ci-dessus, la chute de pression moyenne et au travers des fentes d'injection, d'environ 3800 Pa, a été suffisante pour former un lit fluidifié relativement homogène, tournant à environ 11 tours par seconde, sans chenalisation rotative, avec une pression centrifuge moyenne des solides de 44 000 Pa et une chute de pression totale au travers du lit fluidifié de 96 000 Pa, soit 25 fois la chute de pression moyenne dans les fentes d'injection.

## Revendications

1. Dispositif à lit fluidifié rotatif comprenant :
- un réacteur comprenant au moins une chambre circulaire,
- un dispositif d'alimentation et un dispositif d'évacuation de particules solides (10) dans et de ladite chambre circulaire,
- un dispositif d'alimentation d'un ou plusieurs fluides (2), gazeux ou liquides, disposé autour de la paroi circulaire (1) de ladite chambre circulaire, ledit dispositif comprenant des injecteurs de fluide répartis autour de ladite paroi circulaire (1) dont l'orientation a une composante tangentielle à ladite paroi circulaire, permettant d'injecter le ou lesdits fluides (2) dans ladite chambre circulaire le long de ladite paroi circulaire dans une direction ayant une composante tangentielle à ladite paroi circulaire, et
- un dispositif d'évacuation du ou des fluides,
**caractérisé en ce que** lesdits injecteurs de fluides comprennent des passages comprenant un ou plusieurs étranglements qui s'élargissent de manière non aérodynamique permettant ainsi de contrôler la distribution des flux du ou desdits fluides le long de ladite paroi circulaire et d'améliorer la fluidisation et l'homogénéité dudit lit fluidifié rotatif.

2. Dispositif selon la revendication 1, **caractérisé en ce que** ledit dispositif d'évacuation du ou des fluides comprend une cheminée centrale traversant longitudinalement ou pénétrant à l'intérieur de ladite chambre circulaire, la paroi de ladite cheminée centrale comprenant au moins une ouverture de sortie permettant d'évacuer centralement, par ladite cheminée centrale, le fluide ou mélange de fluides de ladite chambre circulaire.

3. Dispositif selon la revendication 2, dans lequel ladite au moins une ouverture de sortie comprend un passage comprenant un ou plusieurs étranglements qui s'élargit de manière non aérodynamique.

4. Dispositif selon la revendication 1 à 3, dans lequel lesdits étranglements sont obtenus à l'aide éléments d'obstruction (20) longitudinaux et/ou transversaux.

5. Dispositif selon l'une quelconque des revendications 1 à 4, dans lequel le rapport entre la section de sortie des injecteurs du ou desdits fluides et la section desdits étranglements est au moins égal à 2.

6. Dispositif selon l'une quelconque des revendications 4 ou 5, dans lequel lesdits éléments d'obstruction sont constitués par la forme structurelle de ladite paroi circulaire.

7. Dispositif selon l'une quelconque des revendications 4 ou 5, dans lequel lesdits éléments d'obstruction comprennent des blocs longitudinaux (20) placés à l'intérieur des passages.

8. Dispositif selon l'une quelconque des revendications 4 ou 5, dans lequel lesdits éléments d'obstruction comprennent des blocs transversaux (20) placés à l'intérieur des passages et divisant lesdits passages en une succession d'étranglements transversaux.

9. Dispositif selon la revendication 8, dans lequel les longueurs longitudinales (23) des blocs transversaux sont égales ou supérieures à la longueur longitudinale (19) des étranglements.

10. Dispositif selon l'une quelconque des revendications 4 ou 5, dans lequel lesdits éléments d'obstruction comprennent des anneaux (30), lesquels anneaux sont appliqués contre et à l'extérieur de ladite paroi circulaire (1), entourent la paroi circulaire, et partiellement couvrent l'ouverture desdits passages.

11. Dispositif selon l'une quelconque des revendications 1 à 10, dans lequel ladite paroi circulaire (1) est formée par une succession de plaques accolées et laquelle paroi est pourvue de surfaces, séparant deux plaques accolées, lesquelles surfaces sont rainurées transversalement formant une succession de passages étroits (43) et d'éléments d'obstruction (44).

12. Dispositif selon l'une quelconque des revendications 1 à 11, dans lequel l'élargissement non aérodynamique se fait avec un angle d'expansion supérieur à 60° le long d'une arête vive.

13. Dispositif selon l'une quelconque des revendications 1 à 12, dans lequel la distance séparant lesdits injecteurs est inférieure ou égale au rayon moyen de ladite paroi circulaire.

14. Dispositif suivant l'une quelconque des revendications 2 à 13, **caractérisé en ce que** la somme des sections des dites ouvertures de sortie est inférieure au double de la somme des sections de sortie desdits injecteurs de fluide.

15. Dispositif suivant l'une quelconque des revendications 2 à 14, **caractérisé en ce que** la distance séparant lesdites ouvertures de sortie est inférieure ou égale au rayon moyen de la paroi de ladite cheminée.

16. Dispositif suivant l'une quelconque des revendications 1 à 15, **caractérisé en ce que** les directions d'injection du ou des fluides par lesdits injecteurs forment un angle inférieur ou égal à 30° avec la tangente de ladite paroi circulaire du côté situé en aval desdits injecteurs de fluide.

17. Dispositif suivant l'une quelconque des revendications 1 à 16, **caractérisé en ce que** ladite paroi circulaire (1) est de forme générale cylindrique, elliptique, ou conique, ou sa surface intérieure comprend des parties planes séparant deux injecteurs de fluide consécutifs.

18. Dispositif suivant l'une quelconque des revendications 1 à 17, **caractérisé en ce que** la surface séparant deux injecteurs de fluide consécutifs comprend au moins une partie dont la courbure est concave.

19. Dispositif suivant l'une quelconque des revendications 2 à 18, **caractérisé en ce que** la dite cheminée centrale est reliée à un moteur pouvant la faire tourner.

20. Dispositif suivant l'une quelconque des revendications 1 à 19, **caractérisé en ce que** la dite paroi circulaire est reliée à un moteur pouvant la faire tourner.

21. Utilisation du dispositif selon l'une quelconque des revendications 1 à 20 dans un procédé de polymérisation catalytique, de combustion, de gazéification, de classification, de séchage, d'imprégnation, d'enrobage, ou de traitement de particules solides en suspension dans un lit fluidifié rotatif, ou dans un procédé de craquage, de déshydrogénation ou de transformation catalytique de fluides.

22. Procédé d'injection de fluide dans un dispositif à lit fluidifié rotatif de particules solides tournant le long d'une paroi circulaire, le procédé comprenant l'injection du fluide dans une direction ayant une composante tangentielle à ladite paroi circulaire à travers des fentes d'injections comprenant des étranglements s'élargissant brutalement, de manière non aérodynamique, afin de générer une chute de pression et de générer de la turbulence avant la rencontre du fluide et lesdites particules solides.

23. Procédé selon la revendication 22, **caractérisé en ce que** la composante principale de la direction d'injection est tangentielle et de préférence supérieure au double de la composante radiale ou longitudinale.

24. Procédé selon l'une quelconque des revendications 22 à 23, **caractérisé en ce que** la turbulence consiste en des tourbillons de petites dimensions par rapport à l'épaisseur du lit fluidifié.

25. Procédé selon l'une quelconque des revendications 22 à 24, **caractérisé en ce que** le fluide injecté subit une expansion non aérodynamique d'un facteur au moins égal à deux avec une chute de pression au moins égale au dixième de la chute pression moyenne du fluide au travers du lit fluidifié.

26. Procédé selon l'une quelconque des revendications 22 à 24, **caractérisé en ce que** le fluide injecté subit une chute de pression au moins égale au cinquième de la pression centrifuge moyenne des particules solides sur la paroi circulaire.
